# EUROPÄISCHE PATENTANMELDUNG

(11) **EP 1 364 849 A2**
(43) Veröffentlichungstag der Anmeldung: **26.11.2003**
(21) Anmeldenummer: 03011113.2
(22) Anmeldetag: 22.05.2003
(51) Int. Cl.: B60T 11/34, F16K 17/04, G05D 16/10

(54) **Druckbegrenzungseinrichtung und Verfahren zum Entlasten einer Druckbegrenzungseinrichtung**

(30) Priorität: 23.05.2002 DE 10222903
(71) Anmelder: KNORR-BREMSE Systeme für Nutzfahrzeuge GmbH, 80710 München (DE)
(72) Erfinder: Hilberer, Eduard, 68766 Hockenheim (DE)

(57) **Zusammenfassung**

Die Erfindung betrifft eine Druckbegrenzungseinrichtung (10) mit einem Einlassventil (22, 24, 26), das in einem ersten Zustand einen Einlass (14) mit einem Auslass (18) verbindet und in einem zweiten Zustand den Einlass (14) gegen den Auslass (18) abdichtet, und einer abdichtbaren Druckentlastungsverbindung (28, 30, 34, 44, 46), die in einem abgedichteten Zustand den Auslass (18) gegen einen Druckentlastungsraum (36) abdichtet und in einem nicht abgedichteten Zustand den Auslass (18) mit dem Druckentlastungsraum (36) verbindet, wobei die Zustände von Einlassventil und abdichtbarer Druckentlastungsverbindung (28, 30, 34, 44, 46) von der Position des Kolbens (20) abhängen. Der bewegliche Kolben (20) weist eine erste Wirkfläche (38) auf, die durch den am Auslass (18) herrschenden Druck mit einer ersten Kraft beaufschlagt wird, und eine zweite entgegengesetzt ausgerichtete Wirkfläche (40), die von dem am Auslass (18) herrschenden Druck im Wesentlichen unbeeinflusst ist.

## Beschreibung

Die Erfindung betrifft eine Druckbegrenzungseinrichtung mit einem mit Mitteln zur Druckerzeugung verbindbaren Einlass, einem mit wenigstens einem Druckverbraucher verbindbaren Auslass, einem beweglichen Kolben, der in Abhängigkeit von einem am Auslass herrschenden Druck in verschiedene Positionen überführbar ist, einem Einlassventil, das in einem ersten Zustand den Einlass mit dem Auslass verbindet und in einem zweiten Zustand den Einlass gegen den Auslass abdichtet, wobei das Einlassventil in Abhängigkeit von der Position des Kolbens in den ersten Zustand und in den zweiten Zustand überführbar ist, und einer abdichtbaren Druckentlastungsverbindung, die in einem abgedichteten Zustand den Auslass gegen einen Druckentlastungsraum abdichtet und in einem nicht abgedichteten Zustand den Auslass mit dem Druckentlastungsraum verbindet, wobei die abdichtbare Druckentlastungsverbindung in Abhängigkeit von der Position des Kolbens in den abgedichteten Zustand und in den nicht abgedichteten Zustand überführbar ist, wobei der bewegliche Kolben eine erste Wirkfläche aufweist, die durch den am Auslass herrschenden Druck mit einer ersten Kraft beaufschlagt wird, und eine zweite Wirkfläche aufweist, die von elastischen Mitteln mit einer zweiten Kraft beaufschlagt wird, die der ersten Kraft entgegenwirkt.

Die Erfindung betrifft weiterhin ein Verfahren zum Entlasten einer Druckbegrenzungseinrichtung.

Gattungsgemäße Druckbegrenzungseinrichtungen kommen beispielsweise bei der Druckbegrenzung in Druckluftbremsanlagen von Nutzfahrzeugen oder Schienenfahrzeugen zum Einsatz. Sie dienen dazu, den Druck in einem oder mehreren Druckverbraucherkreisen auf einen maximal zulässigen Druckwert zu begrenzen, beispielsweise auf einen typischen Wert von 8,5 bar.

Ein Beispiel für eine solche Druckbegrenzungseinrichtung des Standes der Technik ist in der EP 0 659 621 A1 angegeben. Die dort offenbarte Druckbegrenzungseinrichtung umfasst ein Einlassventil, über das eine Druckquelle mit einem Druckverbraucher verbunden werden kann. Erreicht der Druck auf der Verbraucherseite einen bestimmten Wert, der über eine Federspannung voreingestellt werden kann, so schließt das Einlassventil durch das Zusammenwirken eines Ventiltellers mit einem Ventilsitz. Der Ventilteller wirkt weiterhin mit einem Hohlkolben zusammen; hierdurch wird ein Auslassventil gebildet. Steigt nun im geschlossenen Zustand des Einlassventils der Druck im Bereich des Auslasses der Druckbegrenzungseinrichtung über den zulässigen Grenzwert an, so öffnet sich das Auslassventil, indem der Hohlkolben von dem Ventilteller abhebt. Der überschüssige Druck kann durch die Bohrung des Hohlkolbens in eine Druckabbaukammer und von dort über eine Drossel mit konstantem Querschnitt in einen Druckentlastungsraum, das heißt beispielsweise die Atmosphäre, entweichen. Sobald sich der zulässige Druck im Bereich des Auslasses der Druckbegrenzungseinrichtung wieder eingestellt hat, schließt das Auslassventil, und die Druckentlastung ist beendet.

Die so beschaffene Druckbegrenzungseinrichtung weist mehrere Nachteile auf.

Das Öffnen des Auslassventils erfolgt dadurch, dass eine Wirkfläche des Hohlkolbens aufgrund des Drucks am Auslass der Druckbegrenzungseinrichtung mit Kraft beaufschlagt wird, wodurch sich der Hohlkolben von dem Ventilteller abhebt. In diesem Moment erfolgt eine Strömung vom Auslass der Druckbegrenzungseinrichtung in die Druckabbaukammer. Dies hat zur Folge, dass eine weitere Wirkfläche des Hohlkolbens aufgrund des in der Druckabbaukammer nunmehr erhöht vorliegenden Druckes mit Kraft beaufschlagt wird. Diese Kraft will den Kolben wieder zurück in Richtung auf den Ventilteller treiben. Letztlich wirkt diese Kraft also der Druckentlastungsfunktion der Druckbegrenzungseinrichtung entgegen.

Dieser Effekt wird noch dadurch verstärkt, dass zwischen der Druckabbaukammer und dem Druckentlastungsraum, das heißt im Allgemeinen der Atmosphäre, eine Drossel mit konstantem Querschnitt vorgesehen ist. Bei rasch ansteigendem Druck in der Druckabbaukammer kann über die Drossel der Druck nicht ausreichend schnell abgebaut werden. Mit anderen Worten, es entsteht ein Staudruck in der Druckabbaukammer, der den zuvor beschriebenen Effekt der gegensätzlichen Wirkungen auf den Hohlkolben unterstützt.

Ein weiterer Nachteil der gattungsgemäßen Druckbegrenzungseinrichtung ist damit verbunden, dass neben der Abdichtung des Auslasses gegen die Druckabbaukammer zwei Ventile, das Einlassventil und das Auslassventil, vorgesehen werden müssen, das heißt insgesamt drei Dichtbereiche. Dies macht den Aufbau der Druckbegrenzungseinrichtung kompliziert. Ferner steigt die Fehleranfälligkeit, beispielsweise aufgrund eines defekten Dichtbereiches.

Ein weiterer Nachteil ist damit verbunden, dass aufgrund der Hohlkolbenkonstruktion Wirkfläche verloren geht, die beim Öffnen des Auslassventils benötigt wird. Fordert man eine bestimmte Mindestwirkfläche, so steigt aufgrund der Hohlkolbenkonstruktion letztlich das gesamte Bauvolumen der Druckbegrenzungseinrichtung.

Der Erfindung liegt die **Aufgabe** zugrunde, die Nachteile des Standes der Technik auszuräumen und insbesondere eine Druckbegrenzungseinrichtung und ein Verfahren zum Entlasten einer Druckbegrenzungseinrichtung zur Verfügung zu stellen, so dass letztlich eine kostengünstige, störunanfällige und vergleichsweise klein bauende Einheit zur Verfügung gestellt werden kann.

Diese Aufgabe wird mit den Merkmalen der unabhängigen Ansprüche gelöst.

Vorteilhafte Ausführungsformen und Weiterbildungen der Erfindung sind in den abhängigen Ansprüchen angegeben.

Die Erfindung baut auf der gattungsgemäßen Druckbegrenzungseinrichtung dadurch auf, dass die zweite Wirkfläche des beweglichen Kolbens unabhängig von dem Zustand der abdichtbaren Druckentlastungsverbindung von dem am Auslass herrschenden Druck im Wesentlichen unbeeinflusst ist. Im geschlossenen Zustand des Auslassventils wird eine Wirkfläche des Kolbens aufgrund des am Auslass herrschenden Druckes mit Kraft beaufschlagt, so dass letztlich die abdichtbare Druckentlastungsverbindung öffnet. Dies ist auch bei der Druckentlastungseinrichtung des Standes der Technik der Fall. Sobald allerdings die abdichtbare Druckentlastungsverbindung öffnet, ergeben sich Unterschiede. Beim Stand der Technik öffnet das Auslassventil, so dass eine Kraft auch auf eine entgegengesetzt ausgerichtete Wirkfläche Einfluss nimmt. Bei der Druckentlastungseinrichtung der vorliegenden Erfindung ist dies anders. Hier wirkt auch bei geöffneter Druckentlastungsverbindung keine druckbedingte Kraft auf eine Wirkfläche des beweglichen Kolbens, die der zum Öffnen der abdichtbaren Druckentlastungsverbindung wirkenden Kraft entgegengesetzt wäre. Insbesondere kann es also auch nicht zu Staudrücken kommen, die letztlich die Druckentlastungsfunktion der Druckbegrenzungseinrichtung in Frage stellen.

Die Erfindung ist in besonders vorteilhafter Weise dadurch weitergebildet, dass die abdichtbare Druckentlastungsverbindung durch eine mit einer Gehäusewand der Druckbegrenzungseinrichtung zusammenwirkende Kolbendichtung verwirklicht ist, wobei mindestens ein Kanal in dem Gehäuse im nicht abdichtenden Zustand der abdichtbaren Druckentlastungsverbindung den Auslass mit dem Druckentlastungsraum verbindet. Liegt somit im Bereich des Auslasses ein Druck vor, der unterhalb des Grenzdruckes ist, so ist der Auslass nicht mit dem Kanal im Gehäuse verbunden. Steigt der Druck jedoch an, so wird die Kolbendichtung dem Druck ausweichend verschoben, so dass letztlich der Auslass mit dem Druckentlastungsraum verbunden werden kann. Insbesondere ermöglicht diese Konstruktion der direkten Verbindung des Auslasses mit dem Druckentlastungsraum, das heißt ohne den Umweg über eine Druckabbaukammer, entgegenwirkende Staudrücke zu vermeiden.

Weiterhin ist bevorzugt, dass der nicht abgedichtete Zustand der Druckentlastungsverbindung mehrere Unterzustände umfasst, so dass die Druckentlastungsverbindung in Abhängigkeit der Position des Kolbens unterschiedliche Drosselquerschnitte aufweist. Im Gegensatz zu den Systemen des Standes der Technik ist man also nicht mehr daran gebunden, eine Drossel mit konstantem Querschnitt zur Druckentlastung zu verwenden. Vielmehr kann der Drosselquerschnitt den aktuellen Druckentlastungsanforderungen angepasst werden.

In diesem Zusammenhang ist es besonders nützlich, dass mit zunehmendem Druck am Auslass der Drosselquerschnitt der Druckentlastungsverbindung zunimmt. Somit kann ein höherer Druck aufgrund der bei größerem Drosselquerschnitt potentiell höheren Fördermenge entsprechend effizient abgebaut werden.

Dies kann beispielsweise dadurch erreicht werden, dass die unterschiedlichen Drosselquerschnitte durch mehrere Kanäle in dem Gehäuse realisiert sind, die von der Kolbendichtung beim Verschieben des beweglichen Kolbens aufeinanderfolgend freigegeben werden können. Zunächst wird also beispielsweise nur ein Kanal freigegeben, womit der Drosselquerschnitt eine vorläufige Größe annimmt. Steigt der Druck nun weiter an, so kann durch das weitere Verschieben der Kolbendichtung ein weiterer Kanal freigegeben werden. Insgesamt liegt so ein vergrößerter Drosselquerschnitt vor. Auf diese Weise wird ein mehrstufiger Entlüftungsvorgang zur Verfügung gestellt.

Ebenfalls ist es möglich, dass die unterschiedlichen Drosselquerschnitte durch mindestens einen Kanal realisiert sind, der beim Verschieben des beweglichen Kolbens nach und nach freigegeben werden kann. Auch hierdurch erhöht sich der Drosselquerschnitt mit zunehmenden Druck, wobei allerdings bei der zunehmenden Freigabe des Kanals eine kontinuierliche Druckerhöhung erfolgt.

In Weiterbildung dieses Entlüftungsvorgangs kann vorgesehen sein, dass die unterschiedlichen Drosselquerschnitte durch mindestens einen Kanal realisiert sind, der einen mit dem Verschiebeweg der Kolbendichtung in Richtung vom abdichtenden Zustand zum nicht abdichtenden Zustand mehr als linear anwachsenden freien Querschnitt aufweist. Man stellt zur Entlastung also zu Beginn, das heißt bei möglicherweise vergleichsweise geringem Druck, einen nur sehr kleinen Drosselquerschnitt zur Verfügung. Hierdurch vermeidet man übermäßige Druckverluste, die nachfolgend wieder ausgeglichen werden müssten. Steigt allerdings der Druck zunehmend an, was zu einem weiteren Verschieben der Kolbendichtung führt, kann es nützlich sein, einen großen Drosselquerschnitt zur Verfügung zu stellen, da nun eine rasche Förderung des Druckträgers, das heißt beispielsweise der Luft, im Vordergrund steht.

Die erfindungsgemäßen Druckbegrenzungseinrichtung ist in besonders nützlicher Weise dadurch weitergebildet, dass die abdichtbare Druckentlastungsverbindung mindestens einen O-Ring umfasst, der mit der Gehäusewand der Druckbegrenzungseinrichtung zusammenwirkt. Dies ist eine besonders einfache Realisierung der abdichtbaren Druckentlastungsverbindung, die aufgrund der Verwendung von Standardbauteilen im Sinne einer kostengünstigen Lösung ist.

Aus demselben Grund ist es besonders nützlich, dass die elastischen Mittel zum Beaufschlagen der zweiten Wirkfläche mit Kraft als Feder realisiert sind.

Es ist weiterhin von besonderem Vorteil, dass das Einlassventil einen Ventilteller und einen Ventilsitz umfasst, wobei sich der Ventilteller im geöffneten Zustand des Einlassventils an dem beweglichen Kolben abstützt und in Richtung auf den Ventilsitz durch eine Feder belastet wird. Auch dies ist eine gängige Lösung, um einen Einlass mit einem Auslass abdichtbar zu verbinden und letztlich eine Druckbegrenzung zur Verfügung stellen zu können.

Besonders nützlich ist es, dass der bewegliche Kolben massiv ist. Bei der Druckbegrenzungseinrichtung des Standes der Technik war als wesentliches Element zu verzeichnen, dass ein Hohlkolben vorgesehen ist. Nur so konnte beim Stand der Technik eine Verbindung zwischen dem Auslass und der Druckabbaukammer und letztlich dem Druckentlastungsraum zur Verfügung gestellt werden. Bei der erfindungsgemäßen Lösung muss kein Hohlkolben vorgesehen werden, da aufgrund der speziellen Anordnung eine direkte Verbindung zwischen dem Auslass und dem zum Druckentlastungsraum führenden Kanal allein durch Verschieben von beispielsweise der Kolbendichtung zur Verfügung gestellt werden kann. Durch die Verwendung eines massiven Kolbens wird Wirkfläche für den Druck am Auslass der Druckbegrenzungseinrichtung gewonnen. Ferner ist die Druckbegrenzungseinrichtung aufgrund der Verwendung eines massiven Kolbens einfacher herzustellen.

Die Erfindung besteht ferner in einem Verfahren zum Entlasten einer Druckbegrenzungseinrichtung, insbesondere einer Druckbegrenzungseinrichtung gemäß der vorliegenden Erfindung, das dadurch gekennzeichnet ist, dass eine Kolbendichtung mit einer Gehäusewand der Druckbegrenzungseinrichtung zusammenwirkt und in Abhängigkeit der Position des die Kolbendichtung tragenden Kolbens eine Druckentlastungsverbindung freigibt und dass die Druckentlastungsverbindung in Abhängigkeit der Position des Kolbens unterschiedliche Drosselquerschnitte aufweist. Somit kann stets ein Drosselquerschnitt zur Verfügung gestellt werden, der dem herrschenden Druck angepasst ist. Auf diese Weise werden die Vorteile und besonderen Wirkungen der erfindungsgemäßen Druckbegrenzungseinrichtung auch im Rahmen eines Verfahrens realisiert. Dies gilt auch für die nachfolgend angegebenen besonders bevorzugten Ausführungsformen und Weiterbildungen des erfindungsgemäßen Verfahrens.

Dieses ist besonders nützlich dadurch ausgebildet, dass mit zunehmendem Druck am Auslass der Druckbegrenzungseinrichtung der Drosselquerschnitt der Druckentlastungsverbindung zunimmt.

Weiterhin ist das erfindungsgemäße Verfahren in besonders nützlicher Weise so weitergebildet, dass die unterschiedlichen Drosselquerschnitte durch mehrere Kanäle in dem Gehäuse realisiert sind, die von der Kolbendichtung beim Verschieben des beweglichen Kolbens aufeinanderfolgend freigegeben werden, so dass ein mehrstufiger Entlüftungsvorgang vorliegt.

Ebenfalls ist es möglich, dass die unterschiedlichen Drosselquerschnitte durch mindestens einen Kanal realisiert sind, der beim Verschieben des beweglichen Kolbens nach und nach freigegeben wird, so dass ein proportionaler oder überproportionaler Entlüftungsvorgang vorliegt.

In Weiterbildung dieses Verfahrens kann vorgesehen sein, dass die unterschiedlichen Drosselquerschnitte durch mindestens einen Kanal realisiert sind, der einen mit dem Verschiebeweg der Kolbendichtung in Richtung vom abdichtenden Zustand zum nicht abdichtenden Zustand mehr als linear anwachsenden freien Querschnitt aufweist, so dass ein überproportionaler Entlüftungsvorgang vorliegt. Die als proportionaler und überproportionaler Entlüftungsvorgang bezeichneten kontinuierlichen Entlüftungsvorgänge können ebenfalls mit dem mehrstufigen Entlüftungsvorgang kombiniert sein, beispielsweise durch die Anordnung mehrerer Kanäle, die sukzessive freigegeben werden, wobei zusätzlich mindestens einer der Kanäle nach und nach freigegeben wird, mit proportional oder überproportional anwachsendem freiem Querschnitt.

Der Erfindung liegt die Erkenntnis zugrunde, dass eine kostengünstige und funktionstüchtige Druckbegrenzungseinrichtung sowie ein insbesondere damit in Verbindung stehendes Verfahren zum Entlasten einer Druckbegrenzungseinrichtung zur Verfügung gestellt werden können, wobei die Nachteile des Standes der Technik ausgeräumt und die Probleme des Standes der Technik überwunden werden. Insbesondere findet bei der Druckentlastung der Druckbegrenzungseinrichtung keine Gegenwirkung auf den die Druckentlastung steuernden Kolben statt, es wird vorzugsweise kein Hohlkolben vorgesehen, so dass keine den Wirkungsquerschnitt verringernde Entlastungsbohrung vorliegt, es können mehrstufige und/oder kontinuierliche, das heißt proportionale oder überproportionale Entlüftungsvorgänge gewählt werden, so dass die Probleme aufgrund eines übermäßigen Staudrucks vermieden werden, und die Anzahl der Dichtflächen kann reduziert werden, beispielsweise von drei Dichtflächen, die bei der beschriebenen Druckbegrenzungseinrichtung des Standes der Technik erforderlich sind, auf zwei Dichtflächen bei der Erfindung, nämlich den Einlassventilsitz und die abdichtbare Druckentlastungsverbindung.

Die Erfindung wird nun mit Bezug auf die begleitenden Zeichnungen anhand bevorzugter Ausführungsformen beispielhaft erläutert.

Dabei zeigt:
- Figur 1: eine schematische Schnittansicht einer ersten Ausführungsform einer erfindungsgemäßen Druckbegrenzungseinrichtung;
- Figur 2: eine schematische Schnittansicht einer zweiten Ausführungsform einer erfindungsgemäßen Druckbegrenzungseinrichtung;
- Figur 3: eine Einzelheit betreffend Figur 2; und
- Figur 4: ein Diagramm, bei dem der Entlüftungsquerschnitt gegen den Druck am Auslass der Druckbegrenzungseinrichtung für unterschiedliche Ausführungsformen der vorliegenden Erfindung aufgetragen ist.

Bei der nachfolgenden Beschreibung der bevorzugten Ausführungsformen der Erfindung anhand der Figuren bezeichnen gleiche Bezugszeichen gleiche oder vergleichbare Komponenten.

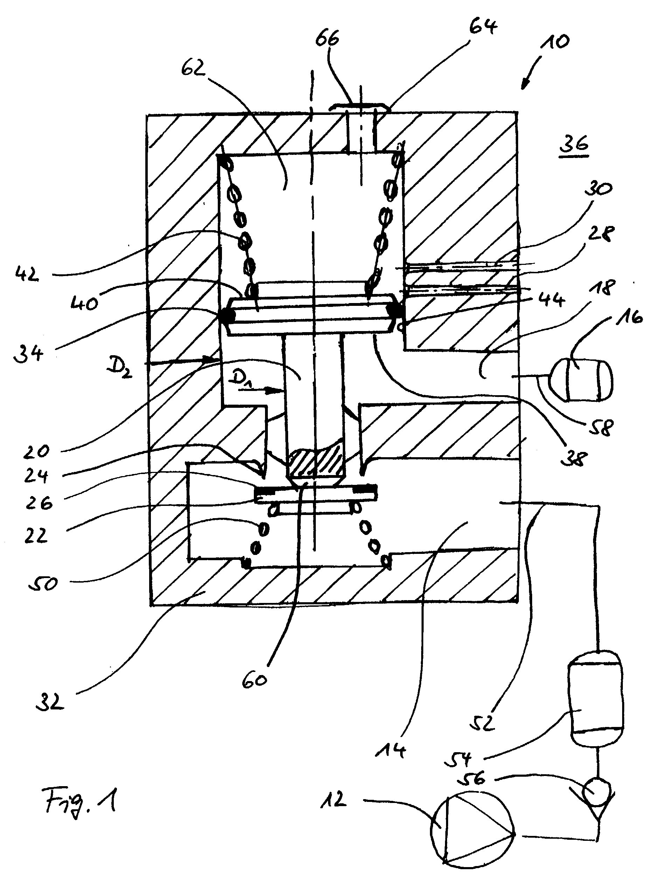

Figur 1 zeigt eine schematische Schnittansicht einer ersten Ausführungsform einer erfindungsgemäßen Druckbegrenzungseinrichtung 10. Die dargestellte Druckbegrenzungseinrichtung 10 umfasst ein Gehäuse 32 mit einem Einlass 14 und einem Auslass 18. An dem Einlass ist zur Veranschaulichung über eine Leitung 52 ein Vorratsbehälter 54 angeschlossen. Der Vorratsbehälter 54 steht über ein Rückschlagventil 56 mit einem Kompressor 12 in Verbindung. Am Auslass 18 ist zur Veranschaulichung über eine weitere Leitung 58 ein Behälter 16 angeschlossen, der einen Druckverbraucher symbolisiert. Der Einlass 14 steht im dargestellten Zustand über ein Einlassventil 22, 24, 26 mit dem Auslass 18 in Verbindung. Das Einlassventil 22, 24, 26 umfasst einen Ventilteller 22, der sich mit einer Dichtbeschichtung 26 auf einen Ventilsitz 24 stützen kann. Ein Kolben 20 stützt sich in dem in Figur 1 dargestellten Zustand über eine oder mehrere Rippen 60 an dem Ventilteller 22 ab. An der den Rippen 60 entgegengesetzten Seite des Kolbens 20 ist eine Kolbendichtung angeordnet, die als mit der Gehäusewand 44 zusammenwirkender O-Ring 34 ausgebildet ist. Der Kolben 20 wird an seinem den Rippen 60 entgegengesetzten Ende durch eine Feder 42 mit Kraft beaufschlagt, die sich am Gehäuse 32 abstützt. Ein Druckausgleichsraum 62, in dem die Feder 42 angeordnet ist, ist über eine Entlüftungsbohrung 64 mit der Atmosphäre 36 verbunden. Die Entlüftungsbohrung 64 ist durch eine Schutzkappe 66 abgedeckt. Weiterhin ist der Druckausgleichsraum 62 im dargestellten Zustand der Druckbegrenzungseinrichtung 10 über zwei Kanäle 28, 30 mit der Atmosphäre 36 verbunden. Der Druckausgleichsraum 62 wird durch das Zusammenwirken des O-Rings 34 mit der inneren Gehäusewand 44 gegen den Auslass 18 abgedichtet.

Die Druckbegrenzungseinrichtung 10 gemäß Figur 1 arbeitet wie folgt. Im drucklosen Zustand sind die von den Federn 50 beziehungsweise 42 aufgebrachten Kräfte so gegeneinander abgestimmt beziehungsweise über (nicht dargestellte) Vorspanneinrichtungen aufeinander abstimmbar, dass der Einlass 14 mit dem Auslass 18 verbunden ist. Somit kann ein von dem Kompressor 12 erzeugter Druck über das Einlassventil 22, 24, 26 zum Auslass 18 gelangen. Mit zunehmenden Druck am Einlass 14 steigt auch der Druck am Auslass 18 an, so dass auch die auf die vorliegend als erste Wirkfläche 38 bezeichnete Fläche des Kolbens 20 wirkende Kraft ansteigt. Aufgrund der endseitigen Konstruktion des Kolbens 20 mit Rippen 60 entspricht die Wirkfläche 38 im Wesentlichen einer Kreisfläche mit dem Durchmesser D₁ + D₂, zylindrische Ausgestaltung des Kolbens 20 vorausgesetzt. Mit anderen Worten, die Rippen 60 geben auch von der Kolbenendfläche einen signifikanten Bereich frei, der zur Wirkfläche 38 beiträgt. Der Kolben 20 wird daher mit zunehmendem Druck gegen die Kraft der Feder 42 bezüglich der in Figur 1 gewählten Darstellung nach oben getrieben, zunächst bis der Ventilteller 22 mit seiner Dichtbeschichtung 26 auf dem Ventilsitz 24 aufsitzt und so das Einlassventil 22, 24, 26 verschließt. Folglich kommt es unter Normalbedingungen auch bei Erhöhung des Druckes am Einlass 14 zu keiner weiteren Erhöhung des Druckes am Auslass 18. Mithin liegt die grundsätzliche Druckbegrenzungsfunktion der Druckbegrenzungseinrichtung vor. Erfolgt nun aber am Auslass 18 aus beliebigen Gründen, beispielsweise aufgrund einer Undichtigkeit des Einlassventils 22, 24, 26 oder durch eine Erwärmung des Verbrauchers 16, eine weitere Druckerhöhung, so wird der Kolben 20 weiter nach oben getrieben. Der Kolben 20 stützt sich dann nicht mehr auf dem Ventilteller 22 ab. Zum Zwecke der Druckentlastung gibt der O-Ring 34 dann den unteren Kanal 28 in dem Gehäuse 32 frei, so dass eine Druckentlastung durch Übertritt von Luft oder einem sonstigen gasförmigen Medium in die Atmosphäre 36, die als Druckentlastungsraum wirkt, erfolgen kann. Findet ein weiterer Druckanstieg am Auslass 18 statt, so kann der Kolben 20 weiter nach oben getrieben werden, so dass nach einer weiteren Verschiebestrecke auch der obere Kanal 30 freigegeben wird. Dies führt zu einer geringeren Drosselwirkung durch eine Vergrößerung des Entlastungsquerschnitts. Bei ausreichender Druckentlastung bewegt sich der Kolben 20 wieder nach unten, so dass letztlich wieder Druckluft vom Einlass 14 zum Auslass 18 gelangen kann. Es ist jedoch auch denkbar, dass sich der Kolben 20 nur soweit nach unten bewegt, dass gerade keine Öffnung des Einlassventils 22, 24, 26 stattfindet. In dem Fall liegt genau der Grenzdruck am Auslass 18 vor.

Mit dem vorstehend beschriebenen Aufbau und der vorstehend beschriebenen Funktionsweise wird somit erreicht, dass der Druckausgleichsraum 62 nicht zur Druckentlastung verwendet werden muss. Es wird also unabhängig von der Stellung des Kolbens 20 keine Kraft auf die vorliegende als zweite Wirkfläche 40 bezeichnete Fläche aufgrund des am Auslass 18 vorliegenden Drucks wirken. Es kommt daher nicht zu einer Gegenwirkung, die den Kolben 20 nach unten treiben könnte und so dem Entlastungsvorgang entgegenstünde.

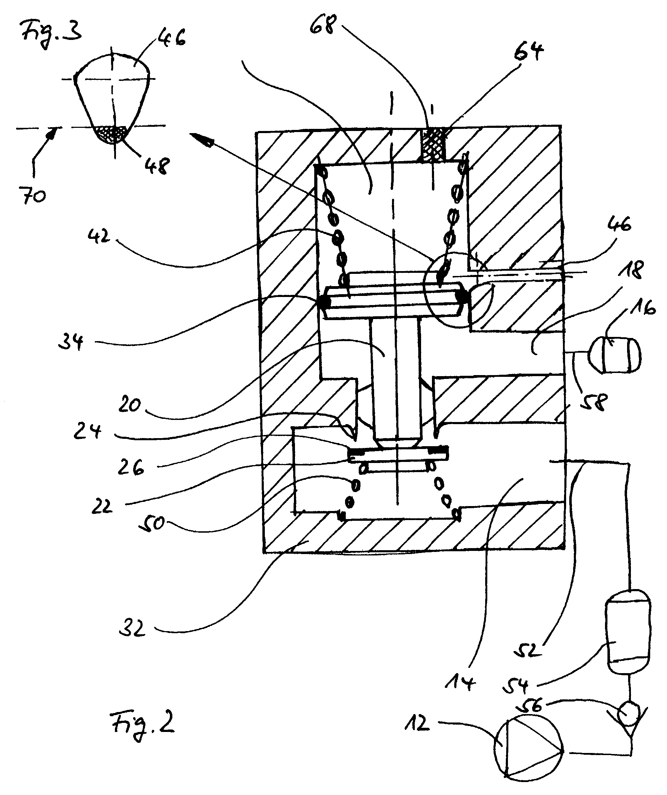

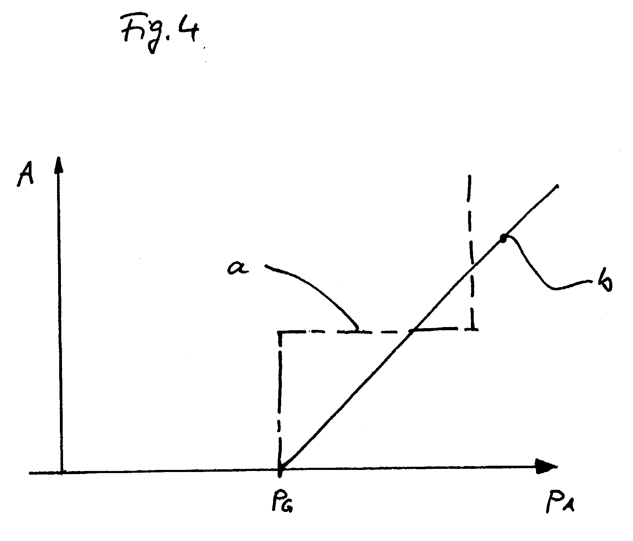

Figur 2 zeigt eine schematische Schnittansicht einer zweiten Ausführungsform einer erfindungsgemäßen Druckbegrenzungseinrichtung 10. Gleichzeitig wird auf Figur 3 eingegangen, die eine Einzelheit betreffend Figur 2 darstellt. Im Unterschied zu Figur 1 ist bei der Druckbegrenzungseinrichtung 10 gemäß Figur 2 nur ein Kanal 46 vorgesehen, der den Auslass 18 mit dem Druckentlastungsraum 36 beziehungsweise der Atmosphäre verbinden kann. Weiterhin ist die Bohrung 64 mit einem Filter 68 ausgestattet, der ein Eindringen von Substanzen aus der Atmosphäre 36 verhindern kann.

Der Kanal 46 ist zum Bereitstellen einer kontinuierlichen Vergrößerung des Drosselquerschnittes bei Aufwärtsbewegung des Kolbens 20 in spezieller Weise ausgestaltet. Um dies zu erläutern, ist der Kanal 46 in Figur 3 im Querschnitt dargestellt. Die mit 70 bezeichnete Linie soll in dem in Figur 3 dargestellten Zustand die untere Kante des O-Rings 34 symbolisieren. Diese in Figur 3 dargestellte Lage des O-Rings 34 entspricht nicht der in Figur 2 dargestellten Lage des O-Rings 34. Mit 48 ist der freie Strömungsquerschnitt des Kanals 46 bezeichnet. Bewegt sich nun der O-Ring 34 und somit die untere Kante 40 weiter nach oben, so wächst der Strömungsquerschnitt kontinuierlich und rascher als linear mit dem Verschiebeweg an. Folglich wird die Drosselwirkung des Kanals 46 schnell herabgesetzt, so dass eine effiziente Druckentlastung erfolgen kann.

Figur 4 zeigt ein Diagramm, bei dem der Entlüftungsquerschnitt gegen den Druck am Auslass der Druckbegrenzungseinrichtung für unterschiedliche Ausführungsformen der vorliegenden Erfindung aufgetragen ist. Der Querschnitt A der Entlastungsöffnung entwickelt sich, ausgehend vom Grenzdruck P_{G}, in unterschiedlicher Weise mit zunehmendem Auslassdruck P_{A}, abhängig von der Gestaltung der abdichtbaren Druckentlastungsverbindung. Die Linie a entspricht einer mehrstufigen Druckentlastung, die beispielsweise bei Systemen gemäß Figur 1 mit mehreren Kanälen 28, 30 erfolgen kann. Die Linie b symbolisiert eine proportionale Druckentlastung, die beispielsweise vorliegen kann, wenn ein Entlüftungskanal nach und nach freigegeben wird. Ebenfalls sind überproportionale Druckentlastungen denkbar, wenn der Querschnitt des Kanals beispielsweise entsprechend dem Kanal 46 gemäß Figur 2 und Figur 3 gewählt wird.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 10: Druckbegrenzungseinrichtung
- 12: Kompressor
- 14: Einlass
- 16: Druckverbraucher
- 18: Auslass
- 20: Kolben
- 22: Ventilteller
- 24: Ventilsitz
- 26: Dichtbeschichtung
- 28: Kanal
- 30: Kanal
- 32: Gehäuse
- 34: O-Ring
- 36: Druckentlastungsraum
- 38: Wirkfläche
- 40: Wirkfläche
- 42: Feder
- 44: Gehäusewand
- 46: Kanal
- 48: Strömungsquerschnitt
- 50: Feder
- 52: Leitung
- 54: Vorratsbehälter
- 56: Rückschlagventil
- 58: Leitung
- 60: Rippe
- 62: Druckausgleichsraum
- 64: Entlüftungsbohrung
- 66: Schutzkappe
- 68: Filter
- 70: Linie
- P_{G}: Grenzdruck
- P_{A}: Ausgangsdruck
- a: mehrstufige Druckentlastung
- b: proportionale Druckentlastung
- A: Querschnitt der Entlastungsöffnung

## Patentansprüche

1. Druckbegrenzungseinrichtung (10) mit
- einem mit Mitteln (12) zur Druckerzeugung verbindbaren Einlass (14),
- einem mit wenigstens einem Druckverbraucher (16) verbindbaren Auslass (18),
- einem beweglichen Kolben (20), der in Abhängigkeit von einem am Auslass (18) herrschenden Druck in verschiedene Positionen überführbar ist,
- einem Einlassventil (22, 24, 26), das in einem ersten Zustand den Einlass (14) mit dem Auslass (18) verbindet und in einem zweiten Zustand den Einlass (14) gegen den Auslass (18) abdichtet, wobei das Einlassventil (22, 24, 26) in Abhängigkeit von der Position des Kolbens (20) in den ersten Zustand und in den zweiten Zustand überführbar ist, und
- einer abdichtbaren Druckentlastungsverbindung (28, 30, 34, 44, 46), die in einem abgedichteten Zustand den Auslass (18) gegen einen Druckentlastungsraum (36) abdichtet und in einem nicht abgedichteten Zustand den Auslass (18) mit dem Druckentlastungsraum (36) verbindet, wobei die abdichtbare Druckentlastungsverbindung (28, 30, 34, 44, 46) in Abhängigkeit von der Position des Kolbens (20) in den abgedichteten Zustand und in den nicht abgedichteten Zustand überführbar ist,
- wobei der bewegliche Kolben (20) eine erste Wirkfläche (38) aufweist, die durch den am Auslass (18) herrschenden Druck mit einer ersten Kraft beaufschlagt wird, und eine zweite Wirkfläche (40) aufweist, die von elastischen Mitteln (42) mit einer zweiten Kraft beaufschlagt wird, die der ersten Kraft entgegenwirkt,
**dadurch gekennzeichnet, dass** ein an die zweite Wirkfläche (40) des beweglichen Kolbens (20) angrenzender Raum (62) unabhängig von dem Zustand der abdichtbaren Druckentlastungsverbindung (28, 30, 34, 44, 46) gegen den Auslass (18) abgedichtet ist und eine Druckentlastung über einen Weg erfolgt, der den an die zweite Wirkfläche (40) des beweglichen Kolbens (20) angrenzenden Raum (62) nicht durchquert, so dass die zweite Wirkfläche (40) des beweglichen Kolbens (20) unabhängig von dem Zustand der abdichtbaren Druckentlastungsverbindung (28, 30, 34, 44, 46) von dem am Auslass (18) herrschenden Druck im Wesentlichen unbeeinflusst ist.

2. Druckbegrenzungseinrichtung nach Anspruch 1, **dadurch gekennzeichnet, dass** die abdichtbare Druckentlastungsverbindung (28, 30, 34, 44, 46) durch eine mit einer Gehäusewand (44) der Druckbegrenzungseinrichtung (10) zusammenwirkende Kolbendichtung (34) verwirklicht ist, wobei mindestens ein Kanal (28, 30, 46) in dem Gehäuse (32) im nicht abdichtenden Zustand der abdichtbaren Druckentlastungsverbindung (28, 30, 34, 44, 46) den Auslass (18) mit dem Druckentlastungsraum (36) verbindet.

3. Druckbegrenzungseinrichtung nach Anspruch 1 oder 2, **dadurch gekennzeichnet, dass** der nicht abgedichtete Zustand der Druckentlastungsverbindung (28, 30, 34, 44, 46) mehrere Unterzustände umfasst, so dass die Druckentlastungsverbindung (28, 30, 34, 44, 46) in Abhängigkeit der Position des Kolbens (20) unterschiedliche Drosselquerschnitte aufweist.

4. Druckbegrenzungseinrichtung nach Anspruch 3, **dadurch gekennzeichnet, dass** mit zunehmendem Druck am Auslass (18) der Drosselquerschnitt der Druckentlastungsverbindung (28, 30, 34, 44, 46) zunimmt.

5. Druckbegrenzungseinrichtung nach Anspruch 3 oder 4, **dadurch gekennzeichnet, dass** die unterschiedlichen Drosselquerschnitte durch mehrere Kanäle (28, 30) in dem Gehäuse (32) realisiert sind, die von der Kolbendichtung beim Verschieben des beweglichen Kolbens (20) aufeinanderfolgend freigegeben werden können.

6. Druckbegrenzungseinrichtung nach einem der Ansprüche 3 bis 5, **dadurch gekennzeichnet, dass** die unterschiedlichen Drosselquerschnitte durch mindestens einen Kanal (46) realisiert sind, der beim Verschieben des beweglichen Kolbens (20) nach und nach freigegeben werden kann.

7. Druckbegrenzungseinrichtung nach einem der Ansprüche 3 bis 6, **dadurch gekennzeichnet, dass** die unterschiedlichen Drosselquerschnitte durch mindestens einen Kanal (46) realisiert sind, der einen mit dem Verschiebeweg der Kolbendichtung in Richtung vom abdichtenden Zustand zum nicht abdichtenden Zustand mehr als linear anwachsenden freien Querschnitt aufweist.

8. Druckbegrenzungseinrichtung nach einem der vorangehenden Ansprüche, **dadurch gekennzeichnet, dass** die abdichtbare Druckentlastungsverbindung (28, 30, 34, 44, 46) mindestens einen O-Ring (34) umfasst, der mit der Gehäusewand (44) der Druckbegrenzungseinrichtung (10) zusammenwirkt.

9. Druckbegrenzungseinrichtung nach einem der vorangehenden Ansprüche, **dadurch gekennzeichnet, dass** die elastischen Mittel zum Beaufschlagen der zweiten Wirkfläche (40) mit Kraft als Feder (42) realisiert sind.

10. Druckbegrenzungseinrichtung nach einem der vorangehenden Ansprüche, **dadurch gekennzeichnet, dass** das Einlassventil (22, 24, 26) einen Ventilteller (22) und einen Ventilsitz (24) umfasst, wobei
- sich der Ventilteller (22) im geöffneten Zustand des Einlassventils (22, 24, 26) an dem beweglichen Kolben (20) abstützt und
- in Richtung auf den Ventilsitz (24) durch eine Feder (50) belastet wird.

11. Druckbegrenzungseinrichtung nach einem der vorangehenden Ansprüche, **dadurch gekennzeichnet, dass** der bewegliche Kolben (20) massiv ist.

12. Verfahren zum Entlasten einer Druckbegrenzungseinrichtung (10), insbesondere nach einem der vorangehenden Ansprüche, bei dem
- eine erste Wirkfläche eines beweglichen Kolbens (20) mit einer ersten Kraft beaufschlagt wird, die aus einem an einem Auslass (18) der Druckbegrenzungseinrichtung herrschenden Druck resultiert,
- der Kolben (20) infolge der ersten Kraft entgegen einer zweiten Kraft, die durch elastische Mittel (42) auf eine zweite Wirkfläche (40) des Kolbens (20) wirkt, verschoben wird und
- eine Kolbendichtung mit einer Gehäusewand (44) der Druckbegrenzungseinrichtung (10) zusammenwirkt und in Abhängigkeit der Position des die Kolbendichtung tragenden Kolbens (20) eine Druckentlastungsverbindung (28, 30, 34, 44, 46) freigegeben wird,
**dadurch gekennzeichnet,**
- **dass** ein an die zweite Wirkfläche (40) des beweglichen Kolbens (20) angrenzender Raum (62) unabhängig von der Stellung des Kolbens (20) gegen den Auslass (18) abgedichtet bleibt und eine Druckentlastung über einen Weg erfolgt, der den an die zweite Wirkfläche (40) des beweglichen Kolbens (20) angrenzenden Raum (62) nicht durchquert, so dass die zweite Wirkfläche (40) des beweglichen Kolbens (20) unabhängig von der Stellung des Kolbens von dem am Auslass (18) herrschenden Druck im Wesentlichen unbeeinflusst bleibt, und
- **dass** der Drosselquerschnitt der Druckentlastungsverbindung (28, 30, 34, 44, 46) in Abhängigkeit der Position des Kolbens (20) variiert wird.

13. Verfahren nach Anspruch 12, **dadurch gekennzeichnet, dass** mit zunehmendem Druck am Auslass (18) der Druckbegrenzungseinrichtung (10) der Drosselquerschnitt der Druckentlastungsverbindung (28, 30, 34, 44, 46) zunimmt.

14. Verfahren nach Anspruch 12 oder 13, **dadurch gekennzeichnet, dass** die unterschiedlichen Drosselquerschnitte durch mehrere Kanäle (28, 30) in dem Gehäuse (32) realisiert sind, die von der Kolbendichtung beim Verschieben des beweglichen Kolbens (20) aufeinanderfolgend freigegeben werden, so dass ein mehrstufiger Entlüftungsvorgang vorliegt.

15. Verfahren nach einem der Ansprüche 12 oder 14, **dadurch gekennzeichnet, dass** die unterschiedlichen Drosselquerschnitte durch mindestens einen Kanal (46) realisiert sind, der beim Verschieben des beweglichen Kolbens (20) nach und nach freigegeben wird, so dass ein proportionaler oder überproportionaler Entlüftungsvorgang vorliegt.

16. Verfahren nach einem der Ansprüche 12 oder 15, **dadurch gekennzeichnet, dass** die unterschiedlichen Drosselquerschnitte durch mindestens einen Kanal (46) realisiert sind, der einen mit dem Verschiebeweg der Kolbendichtung in Richtung vom abdichtenden Zustand zum nicht abdichtenden Zustand mehr als linear anwachsenden freien Querschnitt aufweist, so dass ein überproportionaler Entlüftungsvorgang vorliegt.
